# EUROPEAN PATENT APPLICATION

(11) **EP 1 443 260 A2**
(43) Date of publication of application: **04.08.2004**
(21) Application number: 03445129.4
(22) Date of filing: 12.11.2003
(51) Int. Cl.: F16M 11/04

(54) **An adjustable apparatus mounting arrangement**

(30) Priority: 30.01.2003 SE 0300219
(71) Applicant: SMS Safe Brackets AB, 131 06 Nacka (SE)
(72) Inventor: Hillborg, Petter, 120 67 Stockholm (SE); Astradsson, Petter, 185 35 Vaxholm (SE); Delic, Darco, 178 30 Ekerö (SE); Giglio, Marco, 115 59 Stockholm (SE)
(74) Representative: Sundström, Per Olof

(57) **Abstract**

The present invention relates to an apparatus mounting arrangement that comprises a carrier element (50) which includes a connection element (60) and which is adapted to carry at least three arms (20), wherein each arm (20) has at one end an end-portion (21) which includes an opening (22) for a mounting element (35) with which said end (21) can be connected to a threaded opening (42) in one side (41) of the apparatus, wherein the arms (20) are adjustably carried by the carrier element (50) so that the arm openings (22) can be placed and locked in selected positions corresponding to the positions of the connection openings (42) in said side (41) of the apparatus. The opening (22) in each arm end-portion (21) has an inner thread (23), which co-acts with an outer thread (31) on a sleeve (30) of predetermined length. The sleeves (30) are parallel with one another. The arrangement includes screws (35) which extend through the through-passage in respective sleeves (30) and include a head (36) which supports against one end of the sleeve (30). The other, free end of the screw (35) projects from the other end of the sleeve (30) to a chosen extent.

## Description

The present invention relates to an apparatus mounting arrangement of the kind defined in the preamble of Claim 1.

Known to the art are universal apparatus mounting arrangements that include a carrier which includes a connecting element and which is intended to carry at least three arms that extend generally parallel and close together, wherein each arm has a free end-portion which is distal from the carrier and which includes an opening for receiving an attachment element with which said arm end can be connected to a threaded opening in one side of the apparatus, wherein the arms are carried adjustably by said carrier to enable the arm openings to be placed in chosen positions corresponding to the positions of the connection openings in said apparatus side.

Apparatus such as video projectors, for example, are produced in many different models by many different manufacturers. The apparatus shall normally be placed at an appropriate level, normally high up in a room and in a suitable position, for instance relative to a projection screen. There is normally delivered together with the apparatus an apparatus mounting arrangement of the kind defined in the introduction, said mounting arrangement being screwed to threaded openings in an apparatus plate that forms an upper or a lower wall of the apparatus housing. However, one problem with known adjustable apparatus mounting arrangements is that they can only be adjusted to a limited extent, such that the openings in said arm ends can be brought into alignment with all of the threaded attachment openings in the apparatus housing. Moreover, because the screws should not be allowed to protrude excessively inwards of the wall of the apparatus housing it is necessary to provide screws of mutually different lengths for connecting the ends of respective arms to the threaded apparatus holes concerned,. It is also often difficult for the user to cause the end of an arm to support against the apparatus housing at its threaded mounting hole, particularly when the arm is flexurally rigid, since the side of the apparatus housing concerned is often not flat but includes different shoulders, projections or recesses at those positions in which the threaded mounting openings are situated.

Accordingly, one object of the present invention is to provide an apparatus-mounting arrangement that avoids these problems.
These objects are achieved with a mounting arrangement according to the accompanying independent Claim 1.

Other embodiments of the mounting arrangement will be apparent from the accompanying dependent Claims.

One important feature of the invention resides in the fact that the end-portion of each arm includes a threaded bore into which an externally threaded sleeve of predetermined length is screwed, these mounting sleeves being parallel with one another. Also provided are headed screws which extend through the sleeve passageway and the heads of which support against one end of the sleeve and the other ends of which, their free ends, project beyond the other end of the sleeve through a given distance. Screws of mutually different diameters or mutually different threads may therewith be provided for matching the thread or the diameter of the apparatus hole concerned, although it is hardly necessary to provide screws of different lengths.

Different known designs enable the effective length and desired orientation of the arms to be set and fixed. However, with regard to simplicity, there is preferred a design that comprises elongate arms which include slots along those parts distal from the sleeve, said slots being located on a common screw or bolt belonging to a screw joint that can be readily tightened and released respectively with the aid of a knob or like arrangement that co-acts with the screw, wherewith respective arm lengths can be freely adjusted within wide limits by length displacement of the arms, and wherewith the orientation or direction of the arms can be readily set. In one such embodiment, the arms are stacked one upon the other along the bolt. In preferred embodiments, the free end-parts of the arms are displaced in parallel in mutually the same direction in the longitudinal direction of the bolt/screw such as to lie in a planar surface, wherewith the bolt will preferably extend in a direction normal to said planar surface. Thus, the parallel-displaced end-parts form feet that face towards the apparatus. The sleeves may have mutually the same length. The arm-carrying element/fixating element may include a plate for each arm, said plates having on one side a recess for receiving the arm-parts separated by a slot, wherein the slots are slightly shallower (e.g. 1 mm) than the thickness of the arm. The joint includes a screw/bolt where one end thereof is fixed centrally in the bottom of the lowermost plate and extends up through holes in remaining plates and whose free end co-acts with an inner thread of a knob which includes a support surface that bears against said plates. The stack of plates and said knob provide a stable and readily adjustable arm-fastening means, since they enable the arms to be orientated in chosen directions around the screw joint and since the sleeves carried by the arms can be displaced to different distances from the screw joint.

The connecting element of the mounting arrangement may be formed by or carried by the free end of the screw in the screw joint. The connecting element may have the form of a spherical body that can be locked in set rotational positions in an associated joint socket belonging to a mounting arrangement.

The invention will now be described by way of example with reference to the accompanying drawing.

Fig. 1 is a plan view of a universal mounting according to the invention.

Fig. 2 is a sectioned view of the mounting shown in Fig. 1, taken on the line B-B in Fig. 1 and illustrating the mounting as fitted to a projector.

Fig. 3 is a sectioned view of a mounting arrangement at respective ends of the arms of said arrangement, said view being taken on the line A-A in Fig. 1.

Fig. 4 is a perspective view of the projector-mounting arrangement.

Fig. 5 is a plan view of an assembly plate for the carrier elements of said mounting arrangement.

Fig. 6 is a sectioned view taken on the line VI-VI in Fig. 5.

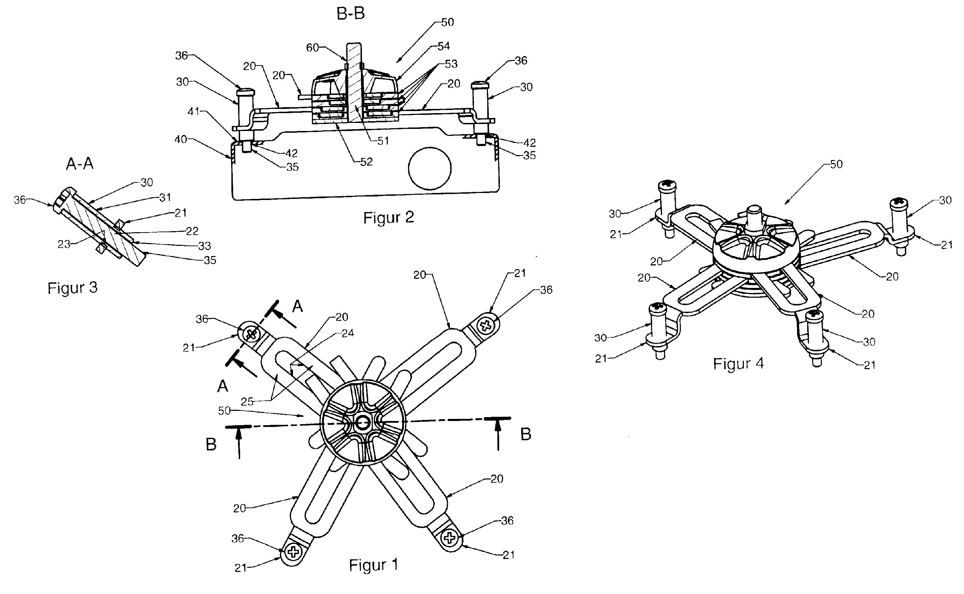

Figs. 1 and 4 illustrate an apparatus mounting arrangement, which is shown connected to a projector 2 (Fig. 2). The mounting arrangement includes a number of arms 20, each of which includes a straight bifurcate part having two prongs 25 separated by a slot 23 that extends up to the free inner end of respective arms. Each arm 20 includes at its outer end an end-portion 21, which is parallel with the inner portion of the arm but offset parallel thereto. The end-portions therewith form arm-supporting feet.

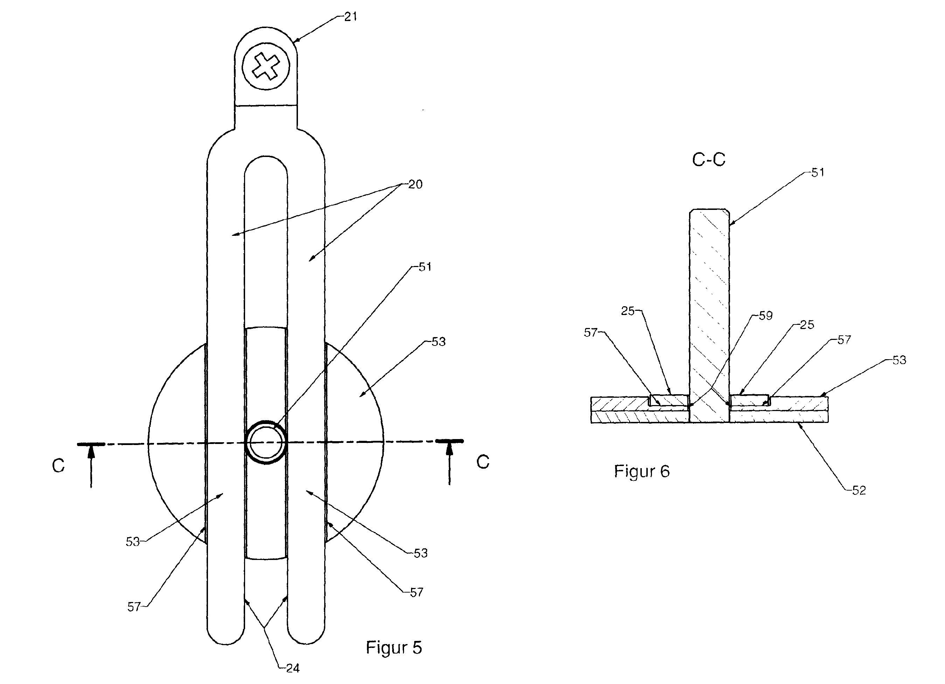

Fig. 2 shows a support assembly 50 in which the arms 20 are fitted onto a screw 51, which is received in the slot 24 of respective arms 20. The screw 51 has an enlarged head 52 at one end and a knob 54 at its other end. The knob 54 has a thread which co-acts with the screw 51 to enable the stack of arms 20 situated between the screw head 52 and the knob 54 to be tightened down. Figs. 5 and 6 illustrate a support plate or swivel element 53 for respective arms 20. The support plate 53 has a through-passing opening 59 for receiving the screw 51, and has on one of its main surfaces two parallel recesses 57 for accommodating respecting portions of the prongs 25 of a bifurcate arm 20. A stack of such plates/swivel elements 53 is fitted onto the screw 51 and each plate 53 receives a bifurcate arm 20. The depth of the recesses 57 is such as to ensure that the arms 20 will be firmly held in respective plates 53 when the plates are brought into mutual abutment with the aid of the knob 54, so that the arms 20 will be secured in a selected position of rotation around the screw 51 and in a chosen axially displaced position relative to said screw 51.

The end-portions 21 of the arms are conveniently offset/displaced in the direction of the screw 51, away from the carrier arrangement 50, so as to lie generally in a common plane, which may be a plane normal to the axial direction of the screw 51.

As will be seen from Fig. 2, a main surface 41 of an apparatus 40, for instance a video projector, has a number of internally threaded bores 42 which receive the free externally-threaded end-portion of a screw 35 whose head 36 supports against an axial end of a sleeve 30. The sleeve 30 has an external thread which is received in an opening 22 that includes an inner thread 23 and that extends through the end-portion 21 of a respective arm.

The other end 33 of the sleeve can be caused to support against the apparatus surface 41 around said threaded hole 42, by screwing said end in one or the other direction in the threaded opening 23 of the arm portion 21. The length of the screw 35 will normally be greater than the length of the sleeve 30, so that the free end-portion of the screw 35 will project out beyond the other end 33 of the sleeve 30 through a predetermined distance when the screw head 36 supports against the first end of the sleeve 30. This prevents the screw 35 from penetrating excessively into the housing of the apparatus 40. The mounting arrangement may also be supplied with screws 35 of a standard length. Of course, it may be necessary to supply mutually different screws 35 together with an inventive universal mounting arrangement, although the screw variations may relate to standard diameters (typically 5 or 6 mm) and/or standard threads.

The sleeve 30 has a free internal diameter that will allow all screws of most usual diameters to pass through the sleeve, and the screws 35 chosen will have heads 36 that support against the first end of the sleeve 30.

It will also be apparent from Fig. 2 that the free end of the screw 51 includes a connecting element in the form of a ball joint 60 which may be formed on a domed nut fastened, in turn, to the end of the screw 51. Alternatively, said end of the screw 51 may have a ball joint configuration. The connecting element 60 is intended to co-act with an associated connecting element (not shown), for instance a ball-receiving socket that is able to carry the ball 60 in a conventional manner and which can be locked against rotation relative to the ball 60.

The connecting element 60 can be connected to a carrier arm, pedestal, ceiling mount or the like in a known manner. An apparatus 40 in the form of a video projector has an additional degree of freedom, in that the projector 40 can be orientated with its underside 41 facing upwards, wherewith the image projected by said projector can be readily reversed to show the images the right way round nevertheless.

## Claims

1. An apparatus mounting arrangement that comprises a carrier element (50) which includes a connecting element (60) and which is adapted to carry at least three arms (20), wherein each arm (20) has at one end an end-portion (21) which includes an opening (22) for a mounting element (35) with which said arm end-portion (21) can be connected to a threaded opening (22) in one side (41) of said apparatus, and wherein the arms (20) are adjustably carried by the carrier element (50) to enable the arm openings (22) to be placed and locked in selected positions corresponding to the positions of the connecting openings (42) in said apparatus side (41), **characterised in that** the opening (22) in each arm end-portion (21) has an internal thread (23) which co-acts with an external thread (31) on a sleeve (30) of predetermined length, wherein the sleeves (30) are parallel with one another; **in that** the mounting arrangement includes screws (35) which extend through passageways in respective sleeves (30) and include heads (36) that support against one end of a respective sleeve (30), wherein the other end of the screw (35), its free end, projects through a given distance from the other end of the sleeve (30).

2. A mounting arrangement according to Claim 1, **characterised in that** the arms have a flat, generally rectangular cross-section, wherein each arm includes a slot (24) along an end-portion distal from the sleeve (30), wherein the slots (24) of said arms (20) are fitted on a common screw (51, 52) belonging to said carrier element (50), wherein the common screw (51) co-acts with a knob or like means, wherein the effective length of respective arms (20) can be set by axial displacement of said arms relative to the screw (51, 52) of said carrier element, and wherein the direction of relative arms (20) relative to the carrier element can be readily set by swinging the arm (20) around the screw (51, 52) of the carrier element.

3. A mounting arrangement according to Claim 1, **characterised in that** the carrier element (50) includes a disc (53) for each arm (20), said disc (53) having a pair of parallel recesses (57) for receiving respective slot-separated arm parts (25).

4. A mounting arrangement according to Claim 3, **characterised in that** the recesses have a depth which is slightly smaller than the thickness of said arms.

5. A mounting arrangement according to any one of Claims 2-4, **characterised in that** the connecting element (60) includes a part of a rotatable and lockable joint which connects with means for suspending said mounting arrangement.
